# EUROPEAN PATENT APPLICATION

(11) **EP 0 761 577 A1**
(43) Date of publication of application: **12.03.1997**
(21) Application number: 95920220.1
(22) Date of filing: 31.05.1995
(51) Int. Cl.: B65G 53/14, B65G 53/18, B65G 53/28, B65G 53/42, B65G 65/40, B65G 65/46, B65G 65/48

(54) **METHOD AND DEVICE FOR SUPPLYING AND CARRYING POWDER**

(30) Priority: 31.05.1994 JP 141009/94
(71) Applicant: NORDSON CORPORATION, Westlake, Ohio 44145-1119 (US)
(72) Inventor: WATANABE, Takashi Nordson Kabushiki Kaisha, Shinagawa-ku Tokyo 140 (JP); MASUDA, Kenichi Nordson Kabushiki Kaisha, Shinagawa-ku Tokyo 140 (JP); SAKAGUCHI, Shigeki Nordson Kabushiki Kaisha, Shinagawa-ku Tokyo 140 (JP); SAKURAZAWA, Masashi Nordson Kabushiki Kaisha, Shinagawa-ku Tokyo 140 (JP)
(74) Representative: Findlay, Alice Rosemary
(86) International application number: JP9501055
(87) International publication number: WO9532907

(57) **Abstract**

Provided are a method and apparatus for supplying and conveying powder, which can always supply and convey a constant amount of powder on a stable basis for a long time period, which can be applied to intermittent supply and conveyance of powder without causing supply and conveyance of extremely-high-concentration powder at start of supply and conveyance of powder, and which have capability of meeting a quick change of an amount of supply and conveyance of powder.

The method and apparatus for supplying and conveying powder are so arranged that the powder reserved in a fluid state in a powder hopper of the fluid bed type is supplied by an intermediate supply pump arranged to communicate with the inside of the powder hopper to a suction port of an ejector pump provided downstream thereof, and that the powder is conveyed together with the compressed gas for ejection of the ejector pump to a predetermined place.

## Description

### TECHNICAL FIELD

The present invention relates to an improvement in techniques for supplying and conveying powder, often used in the fields of powder coating etc., and specifically to a method and apparatus for supplying and conveying powder with quantitative stability at high accuracy.

### BACKGROUND ART

Described referring to Fig. 3 is a method for supplying and conveying powder, which has normally been employed heretofore in the field of powder coating. Namely, Fig. 3 is a drawing to show an apparatus for supplying and conveying powder in the field of conventional powder coating. In the drawing, reference numeral 70 designates an air-blow-type fluid-bed powder hopper, and the powder hopper 70 is arranged to introduce a compressed gas 73 controlled by a control unit 72 through a pipe line 71 into an air chamber 74 in the bottom part of the powder hopper 70 so as to blow the compressed gas through an air-permeable porous plate 75 into the powder hopper 70, whereby powder or powder coating material 76 above the porous plate 75 is retained in a fluid state.

Numeral 77 denotes an ejector pump set on an upper lid 78 of the powder hopper 70, and the ejector pump 77 receives a supply of compressed air for ejection controlled by the control unit 72 through a pipe line 79 and sucks the powder coating material 76 in a fluid state up through a suction tube 80 inserted into the powder hopper 70 by the Venturi effect inside the ejector pump 77; further, the ejector pump receives a supply of compressed gas for atomization controlled by the control unit 72 through a pipe line 81 to fully dilute the powder coating material 76 sucked thereinto to a concentration suitable for powder coating, and conveys the powder coating material with the compressed gas through a hose 82 connected to a discharge port of the ejector pump 77 to a powder spray gun 83. On the other hand, the powder coating material conveyed to the powder spray gun 83 is electrostatically charged by corona discharge caused by a high-voltage current supplied from the control unit 72 through a cable 84 to the powder spray gun 83, and then is sprayed from the powder spray gun 83 toward an object to be coated and coats the surface of the object.

The method for supplying and conveying powder, which is the above conventional technique, had the following problems. Namely, one of the problems is that it cannot always supply and convey a constant amount of powder coating material on a stable basis throughout a long time period. Causes of the problem are deposition of powder in the powder spray gun 83 and hose 82, abrasion of contact surfaces with the powder coating material 76 inside the ejector pump 77, variations of the level of powder coating material stored in the fluid state in the powder hopper 70, variations of resistance (pressure loss) due to a change of bending of the hose 82, pressure changes of the compressed gas for ejection and the compressed gas for atomization, and so on, conceivably in complex combination.

Further, in the cases where spraying of powder coating material 76 from the powder spray gun 83 is arranged so that intermittent spraying and spraying stop are repeated corresponding to individual objects conveyed by a conveyor, charging and charging stop are repeated of the compressed gas for ejection and the compressed gas for atomization supplied to the ejector pump 77; this arrangement cannot avoid a part of powder coating material 76 remaining in the powder spray gun 83 after all at stop of supply of the compressed gas for ejection and the compressed gas for atomization; thus, the remaining coating is sprayed momentarily at start of next spray, which causes another problem of occurrence of extremely-high-concentration spraying at start of spraying.

Further, constant conditions are not always required as to coating conditions of objects to be coated etc. conveyed by the conveyor, that is, as to the coating thickness etc., but a change is often required for a spray amount of coating material per unit time; the change of spray amount of powder coating material is normally effected by adjusting the pressures of the compressed gas for ejection and the compressed gas for atomization supplied to the ejector pump 77. It is, however, extremely difficult to finely adjust the pressures of the compressed gas for ejection and the compressed gas for atomization to make a balance; and where objects to be coated with individually different coating conditions are continuously supplied by the conveyor, quick changes of spray amount become necessary in correspondence thereto, but it is a present status that such a demand is rarely met.

The present invention has been accomplished taking account of such problems, and an object of the present invention is to provide a method and apparatus for supplying and conveying powder which can always supply and convey a constant amount of powder on a stable basis for a long time period in the fields of powder coating etc., which can be free of occurrence of supply and convey of extremely-high-concentration powder at start of supply and convey of powder even in the cases of intermittent supply and convey of powder in accordance with objects to be coated etc. conveyed by the conveyor or the like, and which can quickly change an amount of supply and convey of powder as matching with the conditions of objects to be coated etc.

### DISCLOSURE OF THE INVENTION

The present invention provides a method for supplying and conveying powder, arranged to convey powder reserved in a fluid state in a powder source together with a compressed air to a predetermined portion by an ejector pump, which is characterized in that powder supplying means is provided between the powder source and the ejector pump and in that the powder supplying means supplies the powder at a constant flow rate from the powder source to the ejector pump.

In the above method, in order to intermittently convey the powder, the ejector pump is first actuated at start of conveying the powder and immediately thereafter, the powder supplying apparatus is started to actuate, preferably.

In the above method it is also preferred that the powder supplying means be first stopped operating at stop of conveying the powder and that immediately thereafter, the operation of the ejector pump be stopped.

Specifically, the method of the present invention is a method for supplying and conveying the powder, arranged in such a manner that the powder reserved in a fluid state in a powder hopper of a fluid bed type is supplied by a mono pump (rotary positive-displacement-type uniaxial offset screw pump) arranged as communicating with the inside of the powder hopper, to a suction port of the ejector pump disposed on the downstream side of the mono pump and is conveyed to a predetermined place together with the compressed gas for ejection of the ejector pump.

Further, the present invention provides an apparatus for supplying and conveying powder, comprising a powder hopper of a fluid bed type, and an ejector pump and arranged to convey the powder reserved in a fluid state in the fluid bed together with compressed air to a predetermined portion by the ejector pump, which is characterized in that intermediate supplying means for supplying the powder at a constant flow rate from the hopper to the ejector is provided between the ejector pump and the powder hopper.

In the above apparatus for supplying and conveying powder, the supplying means is preferably a mono pump.

Preferably, the mono pump is arranged to supply the powder downward to the bottom part of the powder hopper, and the ejector pump is arranged below the mono pump so as to receive the powder supplied downward from the mono pump, on the upper side of the pump.

Preferably provided is position adjusting means for position-adjusting a positional relation between the mono pump and the ejector pump.

A motor for rotation-driving the mono pump is preferably of a variable speed type.

Further, the present invention provides a powder coating apparatus comprising a powder hopper of a fluid bed type, a powder coating gun, and an ejector pump for supplying powder reserved in a fluid state in a fluid bed of the powder hopper together with compressed air to the powder coating gun, which is characterized in that intermediate supplying means for supplying the powder at a constant flow rate from the hopper to the ejector is provided between the ejector pump and the powder hopper.

In the powder coating apparatus, the intermediate supplying means is desirably a mono pump, and it is preferred that the mono pump be arranged to supply the powder downward to the bottom part of the powder hopper and that the ejector pump be arranged below the mono pump so as to receive the powder supplied downward from the mono pump, on the upper side of the pump.

A desired arrangement includes position adjusting means for position-adjusting a positional relation between the mono pump and the ejector pump.

Rotation-driving means of the mono pump is preferably a variable speed motor.

Since, according to the above-stated method and apparatus of the present invention, the intermediate supplying means is provided between the powder source and the ejector pump to supply the powder at a constant flow rate from the powder source to the ejector, there is no variation of the amount of supply and convey of powder caused by variations of the level of powder reserved in a fluid state in the powder hopper, as was caused in the conventional technology, and a constant amount of powder can be always supplied and conveyed on a stable basis for a long time period without being affected by pressure changes etc. of the compressed gas for ejection and the compressed gas for atomization in the ejector pump.

Since a sufficient pressure of the compressed gas supplied to the ejector pump is a pressure to cover conveying capacity of powder, the compressed gas may be of a very low pressure; the low pressure of the compressed gas rarely gives rise to abrasion of frictional surfaces with the powder in the ejector pump etc. Thus, there will occur no change in an amount of supply and convey due to abrasion.

For intermittently conveying the powder, it is sufficient to repeat start and stop of the intermediate supplying means without stopping the supply of the ejection compressed gas supplied to the ejector pump; but if the supply of the ejection compressed gas supplied to the ejector pump also needs to be subjected to the charge and stop operation in synchronization with drive of the intermediate supplying means, the apparatus is arranged to perform either one or both of supplying the ejection compressed gas to the ejector pump 100 to 500 milliseconds before the drive start of the intermediate supplying means upon conveying start of intermittent conveyance and stopping supplying the ejection compressed gas to the ejector pump 100 to 500 milliseconds after rotation-drive stop of the intermediate supplying means upon conveying stop of the intermittent conveyance, whereby no powder remains in the pipe line such as a hose on the downstream side of the ejector pump, inside the powder spray gun, etc. or whereby even if there remains some powder, the remaining powder is first conveyed prior to start of supply and conveyance, thereby avoiding supply and conveyance of high-concentration powder, which used to occur at start of supply and conveyance.

Since an amount of supply and conveyance of powder can be changed simply by changing the drive of the intermediate supplying means, specifically, by changing the rotation speed of the mono pump by the variable speed motor, there is no need to finely change or adjust the pressure of the ejection compressed gas or the pressure of the atomization compressed gas supplied to the ejector pump, as needed in the conventional techniques.

Since the apparatus is so arranged that a gap between a discharge port of the mono pump and a suction port of the ejector pump is adjusted with necessity by adjusting means of the positional relation between the mono pump and the ejector pump and that the ejector pump itself sucks a necessary amount of gas through the gap from the outside, the forced supply of atomization gas, as needed in the conventional techniques, becomes unnecessary.

### BRIEF DESCRIPTION OF THE DRAWINGS

Fig. 1 is a partial cross-sectional view for description of a conveying apparatus of powder according to the present invention.

Fig. 2 is a graph to show a result of experiment by the conventional method for supplying and conveying powder.

Fig. 3 is a graph to show a result of experiment by the method for supplying and conveying powder according to the embodiment of the invention.

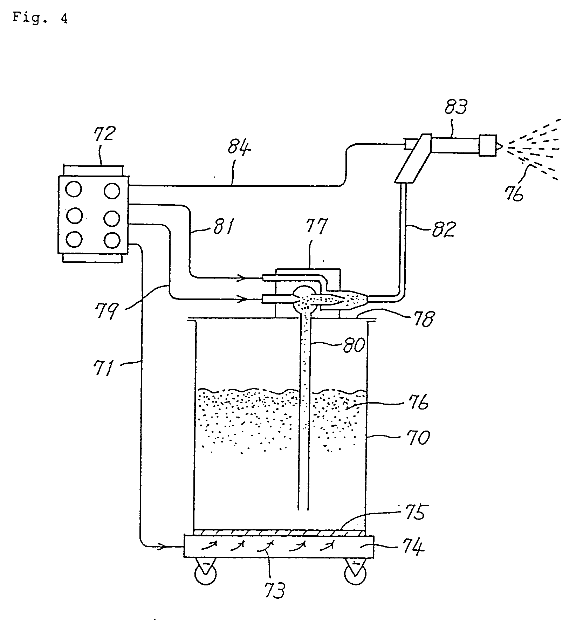

Fig. 4 is a drawing to show an apparatus for supplying and conveying powder in the field of conventional powder coating.

### EMBODIMENT

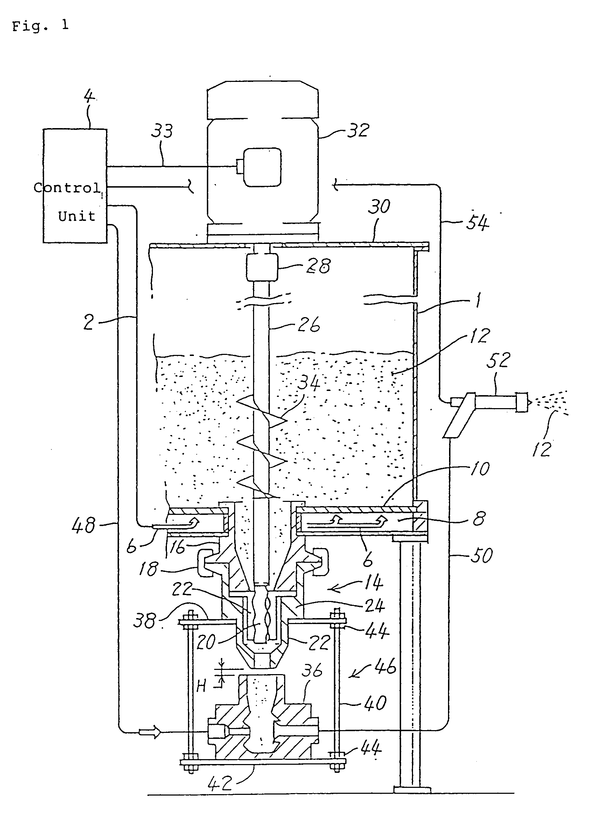

Detailed description will be presented using the drawings showing the embodiment of the apparatus for supplying and conveying powder according to the present invention. Fig. 1 is a partial cross-sectional view for explanation of the conveying apparatus of powder according to the present invention. In the drawing, reference numeral 1 designates a powder hopper of the air blow type and the fluid bed type, and the powder hopper 1 is arranged to introduce a compressed gas 6 controlled by a control unit 4 through a pipe line 2 into a gas chamber 8 in the bottom part of the powder hopper 1 so as to blow the compressed gas through an air-permeable porous plate 10 into the powder hopper 1, whereby powder 12 present above the porous plate 10 is retained in a fluid state. The control unit 4 is composed of control devices necessary for the operation of the entire apparatus, including a micro processor, an apparatus for adjusting and monitoring the pressure and the flow rate of the compressed gas, an apparatus for supplying and monitoring the high-voltage current, etc.

Numeral 14 denotes a mono pump (mono pump), and the mono pump 14 is mounted by clamps 18 to a pump mounting member 16 communicating with the inside of the powder hopper 1. The mono pump 14 is composed of a rotor 20, a stator 22, a housing 24, etc., and the rotor 20 is rotation-driven by a variable speed motor 32 installed on an upper lid 30 of the powder hopper 1 through a rotary shaft 26 and a rotary joint 28 directly connected to the rotor. The control unit 4 performs start, stop, and speed-change controls for the variable speed motor 32 through a cable 33. The rotary shaft 26 is provided with screw wing 34 for the powder 12 in the fluid state to be supplied smoothly to the suction portion of the mono pump 14.

Numeral 36 denotes an ejector pump, and the ejector pump 36 is installed on the downstream side of the mono pump 14 by a mount plate 38 attached to the housing 24 of the mono pump 14, thread rods 40, a support plate 42, nuts 44, etc. The thread rods 40, support plate 42, nuts 44, etc. compose position adjusting means 46 for the ejector pump, and the position adjusting means 46 is constructed so that it can arbitrarily adjust the positional relation between the mono pump 14 and the ejector pump 36, that is, a gap H between the discharge port of the mono pump 14 and the suction port of the ejector pump 36.

The ejector pump 36 receives the compressed gas for ejection controlled by the control unit 4 through a pipe line 48, and conveys the powder received from the mono pump 14 together with the ejection compressed gas through a hose 50 connected to a discharge port of the ejector pump 36, to a powder spray gun 52.

On the other hand, a high-voltage current is supplied from the control unit 4 through a cable 54 to the powder spray gun 52, corona discharge caused by the high-voltage current electrostatically charges the powder 12 conveyed to the powder spray gun 52, and the charged powder is sprayed from the powder spray gun 52 to an object to be coated to coat the surface thereof.

The operation of the present embodiment is next described. First, the powder hopper 1 is charged with a sufficient amount of powder 12, the compressed gas controlled by the control unit 4 is supplied to the gas chamber 8, and the compressed gas is blown through the porous plate 10 into the powder hopper 1, whereby the powder 12 is maintained in a sufficient fluid state in the powder hopper 1. Next, the control unit 4 operates to start the variable speed motor 32, based on a signal from the control unit 4, to supply the high-voltage current to the powder spray gun 52, and to supply the compressed gas controlled to the ejector pump 36. The powder 12, maintained in the fluid state in the powder hopper 1 by these operations, is smoothly conveyed by rotation of the screw wing 34 provided on the rotary shaft 26 to the suction portion of the mono pump 14, is supplied from the mono pump 14 to the ejector pump 36, is further conveyed together with the ejection compressed gas of the ejector pump 36 to the powder spray gun 52, is electrostatically charged in the powder spray gun 52, and is sprayed toward an object to be coated to coat the surface thereof.

In this manner, according to the quantitative stability at extremely high accuracy, which is a property of the mono pump 14, the powder 12 in the fluid state is directly supplied to the suction portion of the ejector pump 36 and is conveyed together with the ejection compressed gas of the ejector pump 36 to the powder spray gun 52. Since a conveying amount of the powder 12 is thus determined by a feed amount of the mono pump 14, the apparatus shows no change of the amount of supply and conveyance of powder 12 depending upon a change of the level of powder 12 reserved in the fluid state in the powder hopper 1 and is not affected by pressure changes etc. of the ejection compressed gas and the atomization compressed gas in the ejector pump 36, different from the conventional apparatus, whereby a constant amount of powder can be always supplied and conveyed on a stable basis for a long time period.

Since a sufficient pressure of the compressed gas supplied to the ejector pump 36 is one to cover conveying capacity of powder, the compressed gas may be of a very low pressure; the low pressure of the compressed gas rarely causes abrasion of frictional surfaces in the ejector pump 36 etc. with the powder for a long time period. Accordingly, there will occur no change in the amount of supply and conveyance due to abrasion, either.

Although for intermittently conveying the powder it is sufficient to repeat start and stop of rotation of the mono pump 14 without stopping the supply of ejection compressed gas to the ejector pump 36, if charge and stop needs to be performed for the supply of ejection compressed gas to the ejector pump 36 in synchronization with rotation of the mono pump 14, the apparatus performs either one or both of supplying the ejection compressed gas to the ejector pump 36 100 to 500 milliseconds before the start of rotation drive of the mono pump 14 upon conveyance start of intermittent conveyance and stopping supplying the ejection compressed gas to the ejector pump 36 100 to 500 milliseconds after the stop of rotation drive of the mono pump 14 upon conveyance stop of intermittent conveyance, whereby no powder 12 remains in the pipe line such as the hose 50 on the downstream side of the ejector pump 36, inside the powder spray gun 52, etc. or whereby even if some powder 12 remains, the remaining powder is conveyed prior to start of supply and conveyance, thereby avoiding supply and conveyance of high-concentration powder, which used to occur at start of supply and conveyance in the conventional apparatus.

Since the amount of supply and conveyance of powder can be changed simply by changing the rotation speed of the mono pump 14 rotated by the variable speed motor 32, there is no need to finely change or adjust the pressure of the ejection compressed gas and the pressure of the atomization compressed gas supplied to the ejector pump 36, as required in the conventional apparatus. The gap H between the discharge port of the mono pump 14 and the suction port of the ejector pump 36 is properly adjusted by the adjusting means 46 of the positional relation between the mono pump 14 and the ejector pump 36, so that the ejector pump 36 itself sucks a necessary amount or gas through the gap from the outside, thus obviating the forced supply of atomization gas as needed in the conventional apparatus.

The series of operations as described above, i.e., adjustment of the compressed gas, supply and stop thereof, control of rotation speed of the variable speed motor, start and stop of the motor, supply and stop of the high-voltage current, etc., can be carried out based on a program preliminarily input in the control unit 4.

### EXPERIMENTS

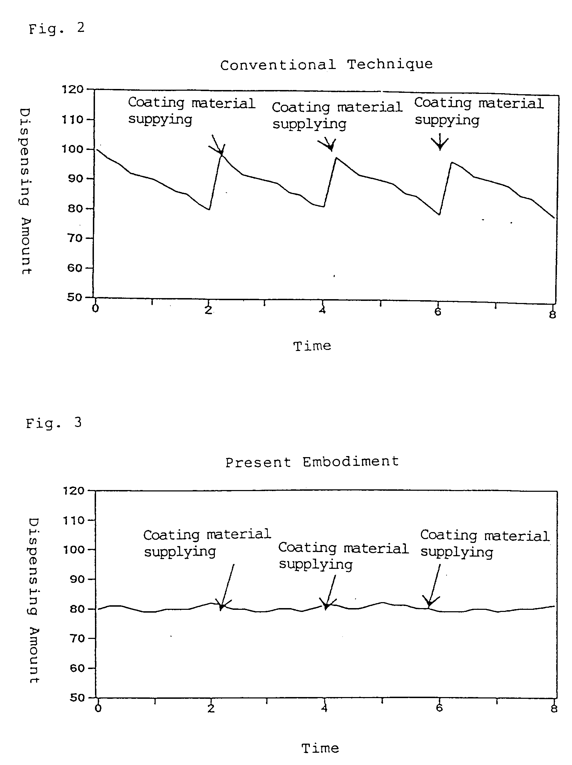

The graphs of Fig. 2 and Fig. 3 show an example of experiment results by the conventional method for supplying and conveying powder and the method for supplying and conveying powder according to the present embodiment, respectively. Namely, Fig. 2 and Fig. 3 are graphs to show experiment results by the conventional method for supplying and conveying powder and the method for supplying and conveying powder according to the present embodiment, respectively. In each of the two graphs the axis of abscissa represents the time and the axis of ordinate the amount of powder sprayed from the powder spray gun. From the graphs, it is seen that the method for supplying and conveying the powder according to the present embodiment is very excellent in quantitative stability.

Since the method and apparatus for supplying and conveying powder according to the present invention are arranged in the arrangement as detailed above, in the fields of powder coating etc., a constant amount of powder can be always supplied and conveyed on a stable basis for a long time period, and the invention can also provide the method and apparatus for supplying and conveying powder, applicable to intermittent supply and conveyance of powder without causing supply and conveyance of extremely-high-concentration powder at start of supply and conveyance of powder and with capability of meeting a quick change of the amount of supply and conveyance of powder.

## Claims

1. A method for supplying and conveying powder, arranged to convey powder reserved in a fluid state in a powder source together with a compressed air to a predetermined portion by an ejector pump, comprising: providing intermediate powder supplying means between said powder source and ejector pump to supply the powder at a constant flow rate from the powder source to said ejector pump by said intermediate powder supplying means.

2. The method for supplying and conveying powder according to Claim 1, wherein when the powder is intermittently supplied and conveyed, the ejector pump is first actuated at start of conveyance of the powder and immediately thereafter the powder supplying means is started.

3. The method for supplying and conveying powder according to Claim 1 or 2, wherein upon stop of conveyance of the powder the intermediate powder supplying means is first stopped and immediately thereafter the operation of the ejector pump is then stopped.

4. An apparatus for supplying and conveying powder, comprising a powder hopper of a fluid bed type, and an ejector pump and arranged to convey powder reserved in a fluid state in said fluid bed together with a compressed air to a predetermined portion by an ejector pump, wherein intermediate supplying means for supplying the powder at a constant flow rate from the hopper to the ejector is provided between said ejector pump and powder hopper.

5. The apparatus for supplying and conveying powder according to Claim 4, wherein said intermediate supplying means is comprised of a mono pump.

6. The apparatus for supplying and conveying powder according to Claim 5, wherein the mono pump is placed on a bottom portion of said powder hopper and the ejector pump is placed downstream of said mono pump.

7. The apparatus according to Claim 6, wherein there is provided position adjusting means for adjusting an amount of sucking air of the ejector pump by position-adjusting a positional relation between the mono pump and the ejector pump.

8. The apparatus according to either one of Claims 5 to 7, wherein there is provided a variable speed motor for rotation-driving the mono pump.

9. A powder coating apparatus comprising a powder hopper of a fluid bed type, a powder coating gun, and an ejector pump for supplying powder reserved in a fluid state in a fluid bed in said powder hopper together with a compressed air to said powder coating gun, wherein intermediate supplying means for supplying the powder at a constant flow rate from said hopper to the ejector is provided between said ejector pump and powder hopper.

10. The powder coating apparatus according to Claim 9, wherein said intermediate supplying means is comprised of a mono pump.

11. The powder coating apparatus according to Claim 10, wherein the mono pump is placed on a bottom portion of said powder hopper and the ejector pump is placed downstream of said mono pump.

12. The powder coating apparatus according to Claim 11, wherein there is provided position adjusting means for adjusting an amount of sucking air of the ejector pump by position-adjusting a positional relation between the mono pump and the ejector pump.

13. The powder coating apparatus according to either one of Claims 10 to 12, wherein there is provided a variable speed motor for rotation-driving the mono pump.
